(19) Europäisches Patentamt

European Patent Office

Office européen des brevets

(11) Veröffentlichungsnummer: **0 296 326 B1**

(12) **EUROPÄISCHE PATENTSCHRIFT**

(45) Veröffentlichungstag der Patentschrift: **09.12.92**

(21) Anmeldenummer: **88106075.0**

(22) Anmeldetag: **15.04.88**

(51) Int. Cl.⁵: **B60B 33/00**, B60B 33/04

(54) **Gefederte Schwerlastrolle.**

(30) Priorität: **09.06.87 DE 3719232**
**24.06.87 DE 3720898**

(43) Veröffentlichungstag der Anmeldung:
**28.12.88 Patentblatt 88/52**

(45) Bekanntmachung des Hinweises auf die
Patenterteilung:
**09.12.92 Patentblatt 92/50**

(84) Benannte Vertragsstaaten:
**CH DE ES FR GB IT LI NL SE**

(56) Entgegenhaltungen:
**DE-B- 1 054 849**
**FR-A- 852 602**
**FR-A- 2 399 328**
**US-A- 4 254 532**
**US-A- 4 559 669**

(73) Patentinhaber: **Heinrich Blickle GmbH &
Co.KG**
**Räder- und Rollenfabrik Robert-
Bosch-Strasse 18**
**W-7463 Rosenfeld(DE)**

(72) Erfinder: **Rauch, Hubert**

**W-7243 Vöhringen/Württ.(DE)**

(74) Vertreter: **Säger, Manfred, Dipl.-Ing. et al
Säger & Partner Patentanwälte Postfach 81
08 09
W-8000 München(DE)**

## Beschreibung

Die Erfindung betrifft eine gefederte Rolle gemäß dem Oberbegriff des Hauptanspruchs.

Eine solche Rolle ist bekannt (US-A 4,254,532). Hierbei werden für die Federanordnung Schraubenfedern verwendet. Wird eine solche Rolle eingesetzt, so hat sich gezeigt, daß in ungünstigen Betriebszuständen die Federung der Rolle dazu führt, daß die mit ihnen versehenen Flurförderzeuge zu stark wippen. Infolgedessen ist der Einsatz solcher bekannten gefederten Rollen bislang beschränkt gewesen.

Der Erfindung liegt die Aufgabe zugrunde, eine gattungsgemäße Lenkrolle gemäß dem Oberbegriff des Hauptanspruchs so weit auszugestalten, daß ihr Einsatz ohne die Gefahr möglich ist, daß die damit versehenen Fahrzeuge zu stark schwanken oder wippen.

Diese Aufgabe wird bei einer gattungsgemäßen Rolle gemäß dem Oberbegriff des Hauptanspruchs erfindungsgemäß durch dessen kennzeichnende Merkmale gelöst.

Aufgrund der Reibungsfeder werden auch starke Schläge gedämpft, so daß infolgedessen die gefederten Schwerlastrollen, auch Schwerlastlenkrollen bei Flurförderzeugen oder dergleichen eingesetzt werden können.

Außerdem kann mit Vorzug die Ringfeder von einem Kunststoffschlauch staubdicht umgeben sein, der zudem noch Federungseigenschaften aufweist. Außerdem ist es von Vorteil, die Ringfeder bzw. auch die Schraubenfeder nicht in Rohren bezüglich der festen Gabel festzuführen, sondern entweder nur das eine Ende der Spannhülse für die Ringfeder festzulegen und den balligen Kopf an der anderen Seite mit einem entsprechend geformten Widerlagerbereich an dem Anschlag zu versehen oder aber beide Enden der Spannhülse ballig zu gestalten und in entsprechend ausgebildeten Widerlagerbereichen zu lagern. Auf diese Weise wird eine führende Ringfeder erzielt.

Ein bevorzugtes Ausführungsbeispiel wird nachfolgend unter Bezugnahme auf die Zeichnung näher erläutert. In dieser zeigt:

Figur 1    einen schematischen Querschnitt durch ein gefederte Schwerlastlenkrolle;

Figur 2    einen Schnitt II-II gemäß Fig. 1;

Figur 3    eine zu gemäß Fig. 1 alternative Ausführungsform.

Mit 1 ist die senkrecht angeordnete Achse bezeichnet, um die die Rolle gedreht wird und welche an dem eigentlichen Gegenstand, beispielsweise Gabelstapler festgelegt wird. Das unterseitige Ende der Achse 1 ist mit einer festen, nach seitlich versetzten Gabel 2 versehen, in der vorrichtungsfest ein - waagerecht angeordnetes - Widerlager 3 für eine insgesamt mit 4 bezeichnete Federanordnung festgelegt ist. Ferner weist die Gabel 2 einen quer zur Achse 1 verlaufenden Anschlagbolzen auf. Parallel zu diesem ist ein Drehlager 6 im unteren rechten Teil angeordnet. an dem eine bewegliche Gabel 7 mit einem Anschlag 8 vorgesehen ist, an dem die Federanordnung 4 zur Anlage kommt und durch den sie beim Einfedern zusammengedrückt wird. Durch den Bolzen 5 wird der Ausfederungsweg für die bewegliche Gabel 7 beschränkt, deren - in der Zeichnung linke - Seite die insgesamt mit 9 bezeichnete Rolle trägt.

Die Federanordnung 4 weist die eigentliche Ringfeder 15 und einen diese staubdicht umgebenden Schlauch 16 auf. Die Ringfeder 4 ist ferner unverlierbar in einer zweiteiligen inneren Spannhülse 12a und 12b angeordnet, die beide mittels einer Spannschraube 13 miteinander verbunden sind und an denen die beiden äußeren Enden der Ringfeder 15 anliegen. Das freie Ende 12a der Spannhülse, der Kopf 14 ist ballig ausgebildet, vorzugsweise kalottenförmig. Daran angepaßt weist - mit Spiel - der Anschlag 8 eine kugelschalenförmige Aufnahme 17 auf.

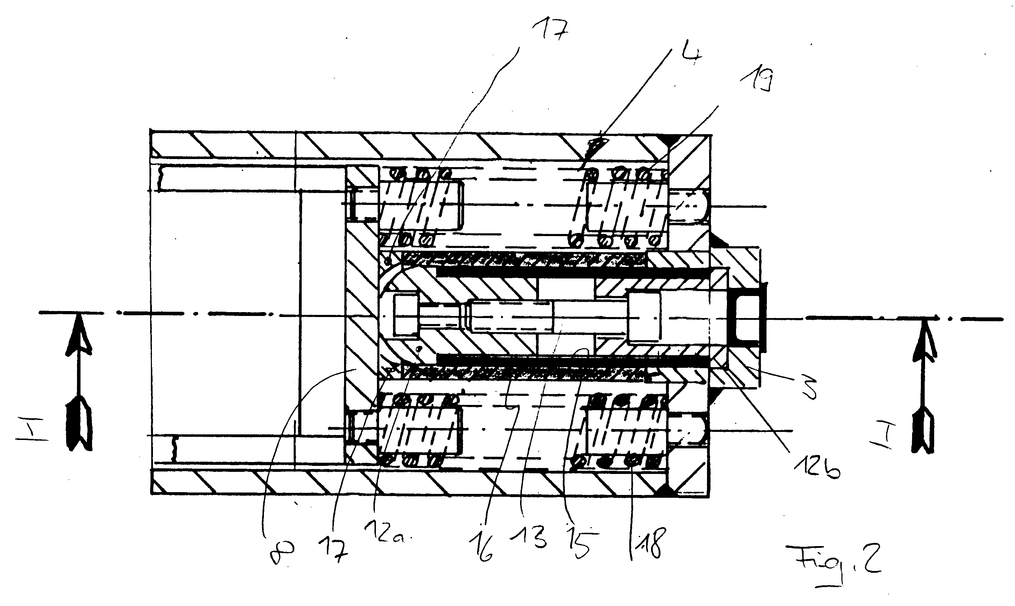

Figur 2 zeigt die mit 4 bezeichnete Federanordnung im Schnitt. Es ist ersichtlich, daß in der gleichen Ebene neben der Ringfeder 15 zwei Schraubenfedern 18, 19 vorzugsweise mit unterschiedlicher Steigung - in an sich bekannter Weise - angeordnet sind.

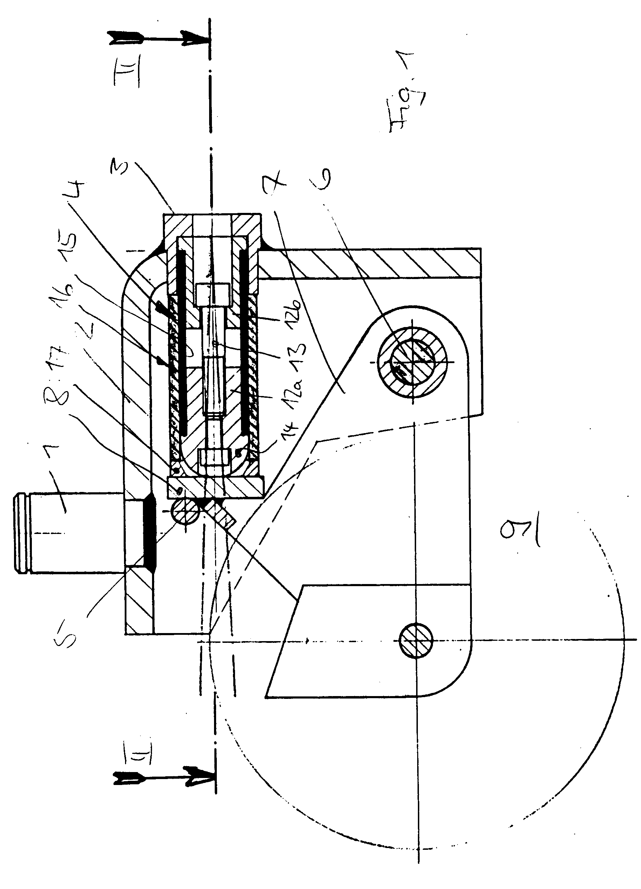

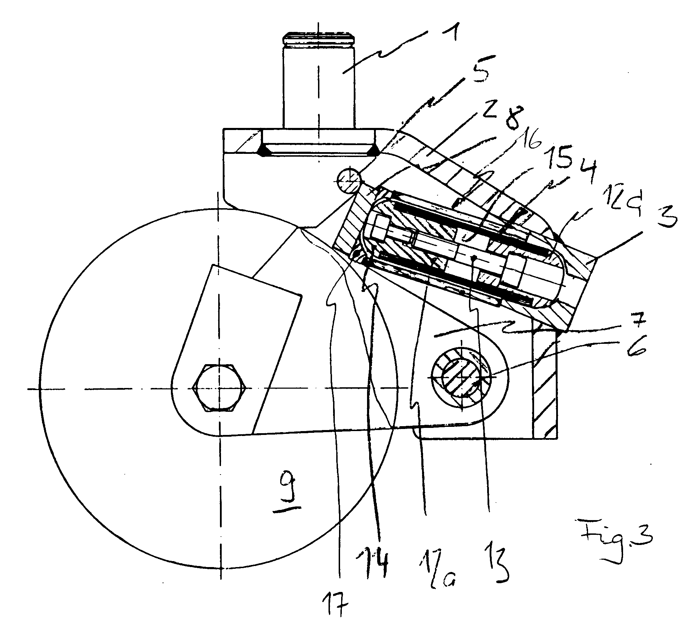

Die alternative Ausführungsform gemäß Fig. 3 zeigt eine im wesentlichen gleiche Anordnung. Deshalb sind auch gleiche Teile mit gleichen Bezugszeichen versehen. Unterschiedlich ist, daß die seitlich versetzte Gabel 2 nach unten abgekippt und entgegen der Ausführungsform zu Fig. 1 die Ringfeder 4 nicht waagerecht, sondern schräg, d.h. im wesentlichen tangential zu dem Drehlager 6 angeordnet ist. Außerdem ist nur eine einzige Ringfeder ohne zusätzliche weitere, beispielsweise Schraubenfeder vorgesehen und sind beide Seiten der Spannhülse 12c ballig ausgebildet. Im übrigen entspricht die Ausführung jener gemäß Fig. 1.

## Patentansprüche

1.    Gefederte Schwerlastlenk- oder -Bockrolle mit einer Achse (1), um die die Rolle drehbar ist und welche mit ihrem oberen Bereich an dem eigentlichen Gegenstand, zum Beispiel Gabelstapler festlegbar ist, wobei das unterseitige Ende der Achse mit einer festen, seitlich versetzten Gabel (2) versehen ist, in der ein Widerlager (3) für eine Federanordnung (4) festgelegt ist, mit einem quer zur Achse (1) verlaufenden Anschlagbolzen (5), mit einem parallel zu diesem angeordneten Drehlager (6), an dem eine bewegliche Gabel (7) mit einem Anschlag (8) für die Federanordnung (4) vorgesehen ist, und mit einer von der beweglichen Gabel (7) getragenen eigentlichen Rolle (9), dadurch gekennzeichnet, daß die Federanordnung (4) zumindest eine Reibungsfeder (15) aufweist.

2. Rolle nach Anspruch 1, dadurch gekennzeichnet, daß die Reibungsfeder als Ringfeder (15) ausgebildet ist.

3. Rolle nach Anspruch 1 oder 2, dadurch gekennzeichnet, daß neben der Ringfeder (15) zumindest eine Schraubenfeder (18, 19) vorgesehen ist.

4. Rolle nach Anspruch 1, 2 oder 3, dadurch gekennzeichnet, daß zwei Schraubenfedern (18, 19) und eine Ringfeder (15) vorgesehen sind (Fig. 1 und 2).

5. Rolle nach Anspruch 4, dadurch gekennzeichnet, daß die Federn (15, 18, 19) nebeneinander in einer Ebene liegend angeordnet sind (Fig. 1 und 2).

6. Rolle nach einem der Ansprüche 1 bis 5, dadurch gekennzeichnet, daß die Ringfeder von einem Kunststoffschlauch (16) staubdicht umgeben ist.

7. Rolle nach Anspruch 6, dadurch gekennzeichnet, daß der Kunststoffschlauch (16) aus Polyurethan besteht.

8. Rolle nach einem der Ansprüche 1 bis 7, dadurch gekennzeichnet, daß in die Ringfeder (16) eine Spannhülse (12a, 12b, 12c) eingesetzt ist, deren eines Ende (3) an der festen Gabel (12) festgelegt ist und deren anderes freies Ende einen balligen Kopf (14) aufweist.

9. Rolle nach Anspruch 8, dadurch gekennzeichnet, daß der Kopf (14) kalottenförmig ausgebildet ist.

10. Rolle nach einem der Ansprüche 1 bis 9, dadurch gekennzeichnet, daß der Anschlag (8) im Bereich des Kopfes (14) der Spannhülse (12) dem Widerlagerbereich (17) dessen Form angepaßt ist.

11. Rolle nach Anspruch 10, dadurch gekennzeichnet, daß der Widerlagerbereich (17) kugelschalenförmig ausgebildet ist.

12. Rolle nach einem der Ansprüche 1 bis 11, dadurch gekennzeichnet, daß der die Ringfeder umgebende Kunststoffschlauch (16) ebenfalls Federungseigenschaften aufweist.

13. Rolle nach einem der Ansprüche 1 bis 12, dadurch gekennzeichnet, daß beide Enden der Spannhülse (12a, 12c) ballig ausgebildet sind.

14. Rolle nach Anspruch 13, dadurch gekennzeichnet, daß beide Widerlagerbereiche kugelscheibenförmig ausgebildet sind (Fig. 3).

**Claims**

1. A sprung heavy-duty castor or support roller comprising a shaft (1) about which the roller is rotatable and which can be fixed with its upper region to the actual object, for example a fork lift, wherein the lower end of the shaft is provided with a fixed, laterally offset fork (2) in which a support means (3) for a spring arrangement (4) is fixed, a stop pin (5) extending transversely to the shaft (1), a rotary mounting (6) which is arranged parallel to the stop pin and on which is provided a movable fork (7) with an abutment (8) for the spring arrangement (4), and an actual roller (9) which is carried by the movable fork (7), characterised in that the spring arrangement (4) has at least one friction spring (15).

2. A roller according to claim 1 characterised in that the friction spring is in the form of an annular spring (15).

3. A roller according to claim 1 or claim 2 characterised in that at least one coil spring (18, 19) is provided besides the annular spring (15).

4. A roller according to claim 1, claim 2 or claim 3 characterised in that there are provided two coil springs (18, 19) and an annular spring (15) (Figures 1 and 2).

5. A roller according to claim 4 characterised in that the springs (15, 18, 19) are arranged to lie in juxtaposed relationship in one plane (Figures 1 and 2).

6. A roller according to one of claims 1 to 5 characterised in that the annular spring is dust-tightly surrounded by a plastics tube (16).

7. A roller according to claim 6 characterised in that the plastics tube (16) comprises polyurethane.

8. A roller according to one of claims 1 to 7 characterised in that fitted into the annular spring (15) is a clamping sleeve (12a, 12b, 12c) of which one end (3) is fixed to the fixed fork (2) and the other free end has a rounded head (14).

9. A roller according to claim 8 characterised in that the head (14) is of a part-spherical configuration.

10. A roller according to one of claims 1 to 9 characterised in that the abutment (8) in the region of the head (14) of the clamping sleeve (12) is adapted to the support region (17) in respect of the shape thereof.

11. A roller according to claim 10 characterised in that the support region (17) is of a part-spherical socket configuration.

12. A roller according to one of claims 1 to 11 characterised in that the plastics tube (16) surrounding the annular spring also has spring properties.

13. A roller according to one of claims 1 to 12 characterised in that both ends of the clamping sleeve (12a, 12c) are of a rounded configuration.

14. A roller according to claim 13 characterised in that both support regions are of a part-spherical disc configuration (Figure 3).

**Revendications**

1. Roulette amortie pivotante ou fixe pour chariots à charges lourdes comprenant un axe (1) permettant de fixer la roulette de manière rotative et pouvant être fixé dans sa plage supérieure sur un véhicule porteur, par exemple un chariot élévateur, l'extrémité inférieure de cet axe étant munie d'une fourche fixe (2), latéralement décalée, équipée d'une butée (3) pour un dispositif d'amortissement (4), et d'un boulon d'appui (5) orienté dans le sens transversal par rapport à l'axe (1) et muni d'un axe de rotation (6) disposé parallèlement à ce boulon d'appui et équipé d'une fourche mobile (7) avec une butée (8) pour un dispositif d'amortissement (4), ainsi qu'une roulette (9) portée par la fourche mobile (7), caractérisée en ce que la dispositif d'amortissement (4) présente au moins un amortisseur à friction (15).

2. Roulette selon la revendication 1, caractérisée en ce que l'amortisseur à friction est réalisé sous la forme d'un ressort-bague (15).

3. Roulette selon l'une quelconque des revendications 1 ou 2, caractérisée en ce qu'elle présente, outre le ressort-bague (15), au moins un ressort cylindrique (18, 19).

4. Roulette selon l'une quelconque des revendications 1, 2 ou 3, caractérisée en ce qu'elle comprend deux ressorts cylindriques (18, 19) et un ressort-bague (15) (figures 1 et 2).

5. Roulette selon la revendication 4, caractérisée en ce que les ressorts (15, 18, 19) sont disposés parallèlement sur un même plan (figures 1 et 2).

6. Roulette selon l'une quelconque des revendications 1 à 5, caractérisée en ce que le ressort-bague est entouré d'un flexible en matière plastique (16) assurant l'étanchéité à la poussière.

7. Roulette selon la revendication 6, caractérisée en ce que le flexible en matière plastique (16) est fabriqué en polyuréthane.

8. Roulette selon l'une quelconque des revendications 1 à 7, caractérisée en ce que le ressort-bague (16) comprend une douille de serrage (12a, 12b, 12c) dont l'une extrémité (3) est montée sur la fourche fixe (12) et dont l'autre extrémité libre présente une tête bombée (14).

9. Roulette selon la revendication 8, caractérisée en ce que la tête (14) est de forme sphérique.

10. Roulette selon l'une quelconque des revendications 1 à 9, caractérisée en ce que la butée (8) située dans la zone de la tête (14) de la douille de serrage (12) est adaptée à la forme de cette tête dans la zone de butée (17).

11. Roulette selon la revendication 10, caractérisée en ce que la zone de butée (17) est réalisée sous la forme d'un coussinet sphérique.

12. Roulette selon l'une quelconque des revendications 1 à 11, caractérisée en ce que le flexible en matière plastique (16) entourant le ressort-bague présente également des caractéristiques d'amortissement.

13. Roulette selon l'une quelconque des revendications 1 à 12, caractérisée en ce que les deux extrémités de la bague de serrage (12a, 12c) sont bombées.

14. Roulette selon la revendication 13, caractérisée en ce que les deux zones de butée sont réalisées sous la forme d'un disque sphérique (figure 3)

Fig. 1

Fig. 2

EP 0 296 326 B1

Fig. 3